# EUROPEAN PATENT APPLICATION

(11) **EP 1 179 495 A1**
(43) Date of publication of application: **13.02.2002**
(21) Application number: 00830578.1
(22) Date of filing: 11.08.2000
(51) Int. Cl.: B65G 47/84

(54) **A device for varying the pitch of articles being conveyed**

(71) Applicant: Fameccanica. Data S.p.A., 66020 Sambuceto di S. Giovanni, Teatino (Chieti) (IT)
(72) Inventor: Pelagatti, Pietro, 66020 Sambuceto di S. Giov. Teatino (Ch) (IT)
(74) Representative: Bosotti, Luciano

(57) **Abstract**

A device for changing the separation pitch of the articles in a flow of articles in motion includes at least a plurality of article-carrying elements (12) capable of performing an orbiting movement around a main axis (X10) from the position where the articles are picked up (T) to the position where they are released (G). Each carrier element (12) is associated with drive elements (32 to 50) for selectively varying the speed of the aforementioned orbiting motion in line with at least one of the two positions (pickup and/or release). The device includes a structure (14 to 22) for supporting the carrier elements (12) capable of performing a rotating movement around the aforementioned main axis (X10). The drive elements (32 to 50) include at least one guide element (32) that guides the corresponding carrier element (12) in a movement following an arched trajectory centered around the aforementioned main axis (X10). The drive elements (32 to 50) control the movement of the carrier elements (12), maintaining the distance between the carrier elements (12) and the device's main axis (X10) substantially unchanged.

## Description

The present invention refers to a device for varying the separation pitch (an operation also known as "pitch changing" or "re-pitching") of articles being conveyed. The invention has been developed paying particular attention to its potential application to the handling of hygienic-sanitary articles such as sanitary towels, pantiliners, etc. The scope of the invention, however, is in no way restricted to this potential field of application.

The document US-A-4 880 102, which serves as a model for the preamble to the patent claim 1, illustrates a device for transferring articles, starting from a first conveyor on which the articles concerned are advanced with a given separation pitch. The articles are transferred to a second conveyor, on which they are advanced with a different separation pitch. The device includes a number of carrier elements mounted so as to rotate around an axis. During their rotation around said axis, these elements are capable of collecting the articles from the first conveyor and carrying them along in order to transfer them subsequently to the second conveyor. During this transfer process, the speed of the elements is changed by overlapping a constant speed component with a second component directed in the opposite direction with respect to the general rotational movement, so as to vary the separation pitch between the articles in their passage from the first to the second conveyor.

Substantially similar solutions can be identified in the other documents, such as US-A-5 480 021 or US-A-4 506 779.

In the solutions described in the above-mentioned documents, the modulating effect on the tangential or peripheral speed at which the articles move around the axis of rotation of the device is always accompanied by a certain variation in the radius of the trajectory of the aforesaid rotating movement around the aforementioned axis.

In other solutions, such as the one described in the document US-A-4 726 876, the parameter that is varied to achieve the required re-pitching effect is just the variation of the radius of the orbiting movement: for a given angular speed at which two subsequent articles orbit around a given axis of rotation, the (circumferential) distance separating the two articles varies with any variation in the radius of the trajectory of the orbiting movement.

Further solutions that are more or less similar to those described above are illustrated in the document US-A-3 728 191 and US-A-4 483 351. From the latter two documents, there also emerges the possibility to orient the articles during the performance of the re-pitching action.

In the practical development of the devices of the type specified above, it is important to take into account certain requirements that are all the more important, the greater the operating speed, i.e. the larger the number of articles handled per unit of time.

In particular, it is necessary for the devices in question to be capable of being of relatively limited dimensions, while nonetheless being able to deal with rather intensive flows of articles.

It is also preferable to be able to use equipment that, without changing its overall structure, can be adapted with ease to different operating conditions (mainly to different proportions between the incoming separation pitch and the outgoing separation pitch), also meeting the need to ensure that such an adaptation can be implemented in a straightforward manner (e.g. by replacing a control element such as a cam or, ideally, by means of a straightforward re-programming operation on an electric control device).

On this point, it is important to note the fact that the devices in question should preferably be capable of modulating the speed of the orbiting motion of the elements for carrying the articles, both during the transfer of the articles onto the conveyor situated downstream from the device and when the articles are picked up from the conveyor situated upstream.

Moreover, and particularly in consideration of the operating speeds required, it is important to be able to develop devices in which the aforementioned modulating effect on the speed of the orbiting movement is achieved exclusively in a circumferential or tangential direction - and consequently without any radial components.

The present invention aims to develop a device capable of satisfying all the above-mentioned requirements. According to this invention, this aim is achieved by means of a device having the characteristics described in detail in the claims that follow.

The invention is described here purely by way of nonlimiting example with reference to the attached drawings, where:
- figure 1 is a cross-section through the diametral plane of a device made according to the invention;
- figure 2 is a front view of said device, corresponding to an observation point roughly identified by arrow II in figure 1;
- figure 3 is a partial cross-section along the line III-III of figure 1;
- figures 4 and 5 are two further figures, substantially corresponding to figures 1 and 2, that illustrate a possible alternative version of the invention; in particular, figure 5 can be considered as essentially coinciding with a cross-section along the line V-V of figure 4.

In general terms, a device made according to the present invention, named 10, is designed to implement the transfer of articles, A, from an incoming conveyor C1 to an outgoing conveyor C2.

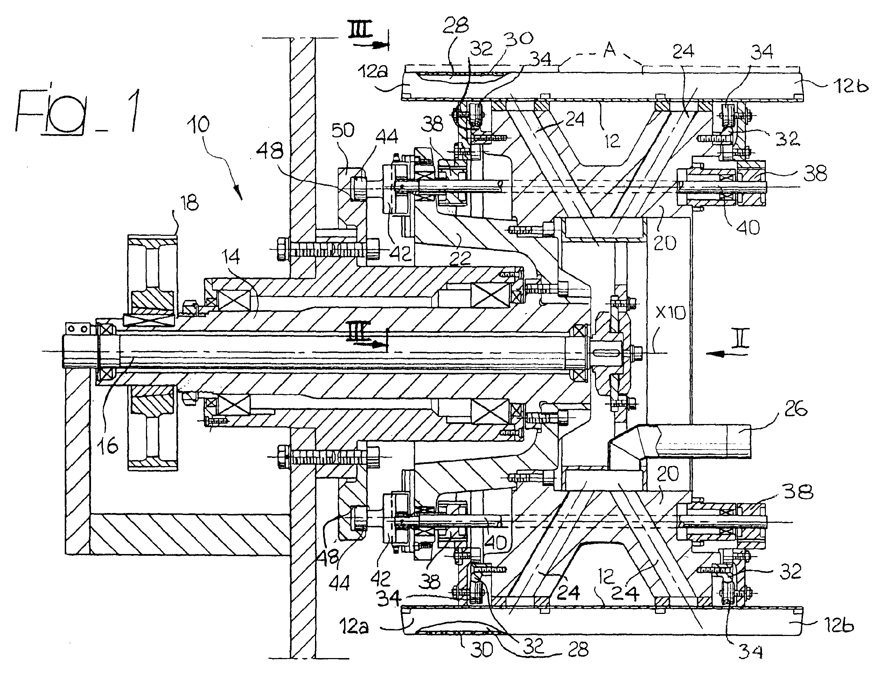

To clarify the concept, the articles A (represented schematically only in figure 1) may be composed of hygienic-sanitary articles, such as sanitary towels, pantiliners, etc.; as mentioned previously, reference to this potential application may not be construed to restrict the scope of the invention in any way.

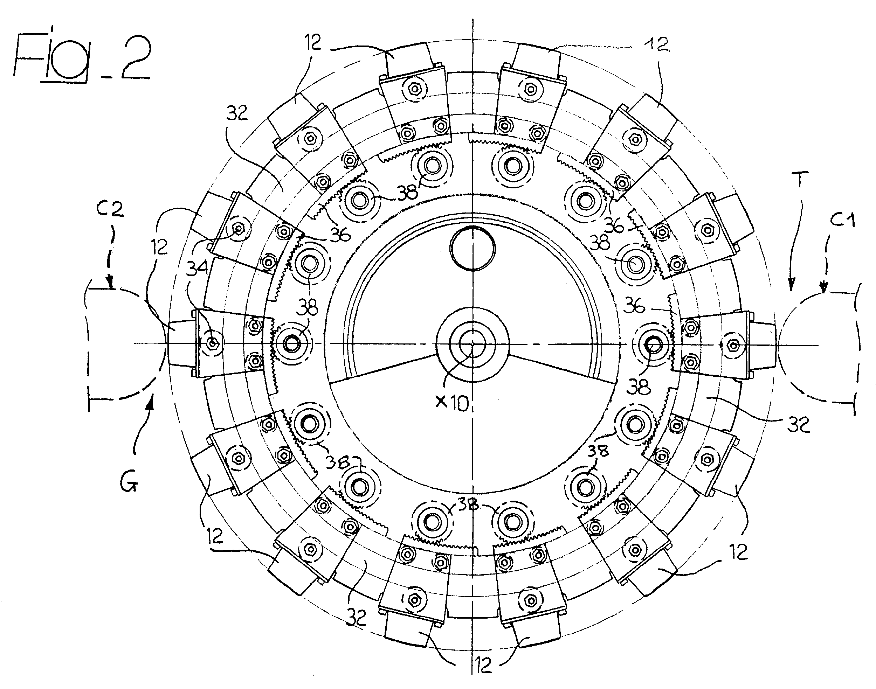

The conveyors C1 and C2 may be conveyors of any kind currently used in technical applications. By way of a schematic example, figure 2 illustrates two conveyors C1 and C2 of the motor-driven belt type.

Conveyors of this type, provided with suitable means (e.g. using a vacuum) for retaining the articles A on board when they are in motion, are well known in technical applications and therefore do not require a detailed description here.

For the purpose of understanding the invention, it is important to note the fact that the articles A advance on the two conveyors C1 and C2 with a different separation pitch.

The purpose of the device is essentially to transfer the articles A from the conveyor C1 to the conveyor C2 while simultaneously achieving a change in the separation pitch.

Simply for a better understanding, we can suppose that the separation pitch on conveyor C1 is greater than the separation pitch on conveyor C2 and that the two positions, T and G, which coincide respectively with (i) where the articles A are picked up from conveyor C1 and (ii) where the articles A are deposited on conveyor C2, are diametrically opposite each other on either side of the device 10, which turns (anti-clockwise with respect to the observation point shown in figure 2) around its main axis X10.

The nature of the articles A and of the conveyors C1 and C2, as well as the relative positioning of the pickup position T and of the depositing position G, could be completely different, however - as demonstrated, for instance, by the various documents based on known technical applications that are mentioned in the introductory part of the present description. It may be useful to refer to said documents for a general illustration of the principle - which can certainly be considered common knowledge - that is exploited to achieve the required pitch changing (or re-pitching) action.

In practical terms, the articles A are picked up from the conveyor C1 at a (peripheral) speed, v1, and they are transferred to the conveyor C2 at a (peripheral) speed, v2, that may be faster or slower than v1, depending on whether we wish to reduce or increase the separation pitch between the articles A.

It becomes clear that, if we indicate the angular speed of rotation of the device 10 around its axis X10 and the radius of the orbiting movement of the articles A respectively as ω and r, it is not generally imperative for one of the two previously-considered speeds, v1 or v2, to correspond to the product ωr. Both the speed v1 and the speed v2 can be governed by modulating (increasing or decreasing) the peripheral speed imparted - at the points T, where the items are collected, and G, where they are released - to the elements 12 on the device 10 that are used to collect, hold, and release the articles A.

In the embodiment of the invention illustrated in figures 1 to 3, the aforementioned carrier elements 12 are composed of boxed elements of elongated shape, mounted on the device 10 so as to be oriented along the generatrices of an ideal cylindrical surface whose axis X10 coincides with the main axis.

On the whole, the device 10 therefore has a structure looking very like a drum, with a main shaft 14 mounted so that it can be made to rotate around a main axle or pin 16 by means of a coupling (achieved by means of a gear, only one wheel of which, 18, is visible) keyed onto the shaft 14 and suitable driving means that are not illustrated in the figure.

Overall, each of the elements 12 (including the associated parts) can be seen as forming a spoke, or a rib, in the drum-like structure of the device 10.

In the embodiment illustrated in figures 1 to 3, there are fourteen such spokes, presenting a generally identical structure. As the reader can see more clearly in figure 1, each element 12 is configured in such a way as to be able to operate separately and simultaneously on two articles A (e.g. sanitary towels or pantiliners) by means of the two ends, 12a and 12b, of the element 12. The device 10 illustrated in figures 1 to 3 is capable of operating simultaneously on two flows of articles advancing side by side on the conveyors C1 and C2.

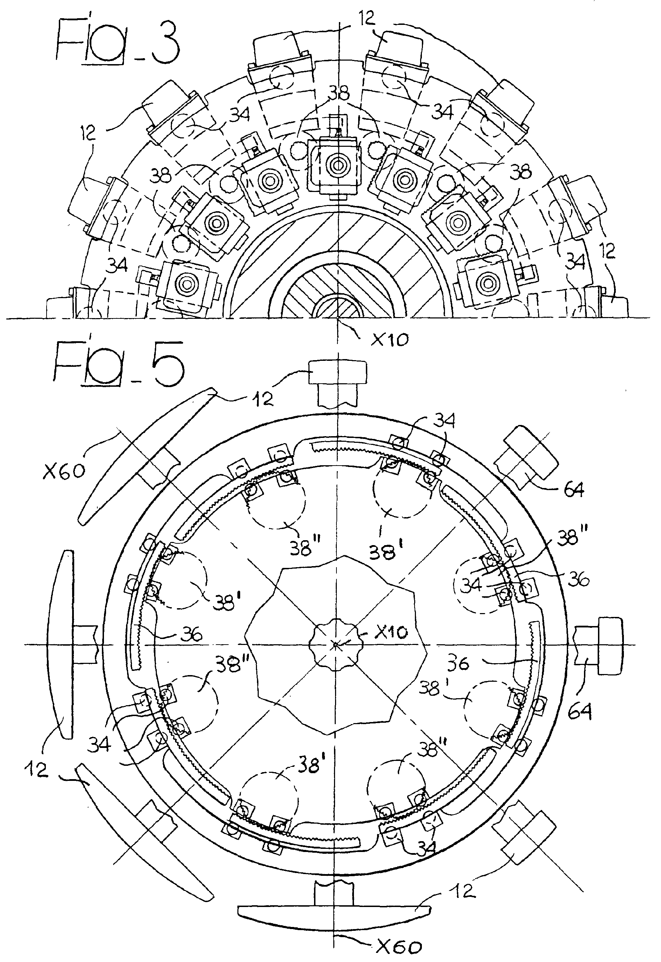

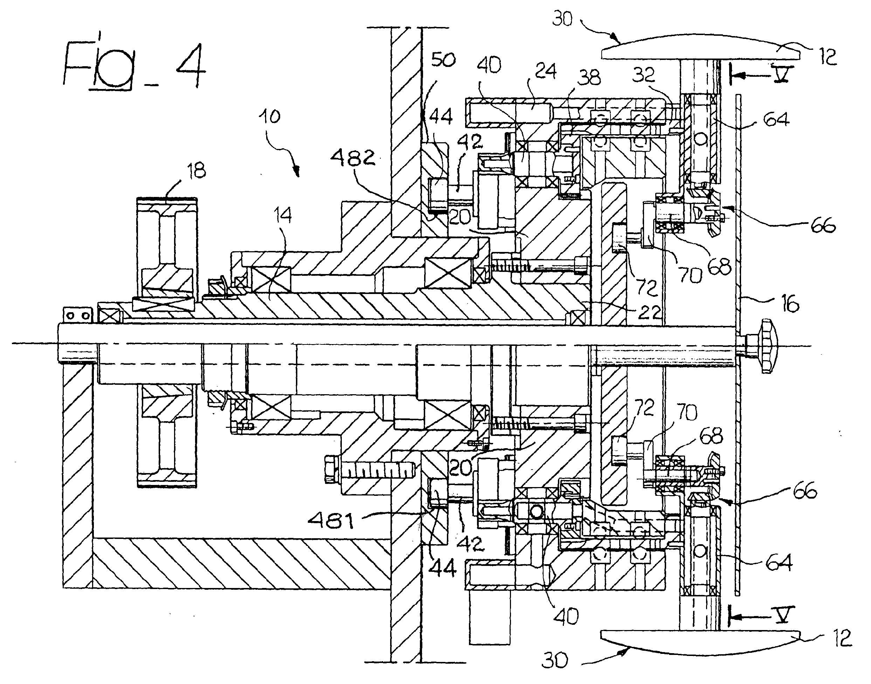

The structure of the device in the variant illustrated in figures 4 and 5 is, on the whole, very similar. It includes eight carrier elements 12, again forming spokes or ribs on the drum-like structure of device 10. The main differences in the version illustrated in figures 4 and 5 with respect to the solution illustrated in figures 1 to 3 can be brought down to the fact that:
- in the case of the embodiment illustrated in figures 4 and 5, the drive elements for the various carrier elements 12 are arranged (as we shall see better in the following pages) in two concentric rows: to be more precise, there are two rows, each comprising four drive assemblies; and
- in the solution illustrated in figures 4 and 5, in addition to changing the separation pitch of the articles A, the device 10 is also capable of achieving their rotation around their own axis in order, for instance, to make the articles A advancing "lengthwise" along the first conveyor C1 proceed "crosswise" along the second conveyor C2.

In the following paragraphs, for obvious reasons of brevity, the specific characteristics of one of the elements 12 on the drum 10 illustrated in figures 1 to 3 will be described, taking for granted that, in the absence of any specific indications to the contrary, the description of said element also applies in precisely the same way (or substantially the same way) to all the other elements 12 illustrated in the figures.

This applies, in particular, to the fact that each of the elements 12 is associated, on the block 20 that enables its attachment to the hub or core 22 of the device 10, with a corresponding aspiration duct 24 leading to vacuum lines 26 that can be connected (by means of a manifold and a suction line that are not illustrated in the drawings, but are of known type) to a source of subatmospheric pressure in order to enable the creation of a subatmospheric pressure in the cavities 28 inside each element 12 during the operation of the device 10. Since the elements 12 have a perforated external surface (see the perforations illustrated by the number 30), the effect of said subatmospheric pressure is sufficient to induce an air flow from the outside towards the inside of the elements 12. This air flow is obstructed by the articles A attached to the outer surfaces of the elements 12, giving rise, on the basis of well-known phenomena, to the articles A being firmly held and anchored to the elements 12 during their transfer from the conveyor C1 to the conveyor C2.

In particular, it is common knowledge that the manifolds connected to the lines 24 can be made so that the above-mentioned retaining vacuum action is applied at the position T (i.e. when the device 10 picks up the articles A from the conveyor C1), maintained throughout the orbiting passage of the article from T to the position of its release G, and stopped in line with the latter position so as to ensure that the articles A can be transferred from the device 10 to the conveyor C2.

The numerical reference 32 indicates the guide elements as a whole (which can be arranged along a single circular trajectory, or configured as successive segments of a single circular trajectory), each of which extends along at least one corresponding trajectory concentric with the axis of rotation X10 of the drum. It is preferable for the guide elements 32 to be provided at both ends of the drum-like structure of the device 10 (for obvious balancing and centering reasons).

Each element 12 includes revolving bodies (e.g. bearings or rollers 34) which enable its movement on the guide elements 32.

It is also evident that the kinematic arrangement could be at least virtually reversed, though the one illustrated certainly appears preferable for engineering reasons.

Be that as it may, it is clear that, in the manner described, the movement of the elements 12 destined to come to bear on the articles A occurs along arched trajectories corresponding to the respective sections of a circular trajectory centered around the axis X10.

This means that the movement of the elements 12 (and therefore of the articles A carried by them) is achieved along a path that is entirely circumferential with respect to the axis X10 and consequently without any radial components of any kind sufficient to alter - even temporarily - the distance that separates the articles A from the axis X10.

It would be preferable for the aforementioned movement to be controlled by fitting the body of each element 12 with a rack 36 (see detail in figure 2) engaging a pinion 38 that is keyed onto the shaft 40, and also extending along a generatrix of an ideal cylindrical surface whose axis coincides with the axis X10.

In the embodiment illustrated in figures 1 to 3, the shaft 40 actually carries two pinions 38 destined to co-operate with the corresponding racks 36 provided at both ends of the element 12, the whole assembly being arranged so as to ensure regular movement, with an even distribution of the stress. This is also in consideration of the fact that the accelerations imparted to the elements 12 to make them move forwards and/or backwards with respect to the device 10 may become quite strong, without neglecting the fact that the device 10 as a whole is destined to turn around the axis X10 at a speed that may also be considerable.

The rotating movement of the shaft 40 in one or other direction therefore determines a corresponding movement of the related element 12 with respect to the body of the device 10.

With reference to the turning direction of the device 10 (which is anticlockwise, as seen from the observation point of figures 2 and 5), the movement induced in the elements 12 with respect to the device 10 as a whole - which already rotates in its own right - can be either a forward motion or a reverse motion.

For a given angular velocity of rotation of the device 10 around the axis X10, a forward movement of the element 12 equates to an acceleration, while a reverse movement coincides with a deceleration. The terms acceleration and deceleration are obviously used with respect to the peripheral speed acquired by an element 12, that remains stationary with respect to the device 10, therefore moving with a peripheral speed corresponding to the product of the angular velocity ω of the device 10 and the radius or distance at which the element 12 lies with respect to the axis X10.

The rotating movement of the shaft 40 (and therefore of the corresponding elements 12) is controlled by a crank 42 - see figures 1 and 4, respectively - situated at one end of the shaft 40 and carrying at its free end at least one follower element 44 (generally composed of a roller or bearing) destined to co-operate with a cam surface 48 fitted in a disc-shaped element 50 placed around the shaft 14 so as to be fixed with respect to the rotating movement of the device 10 around the axis X10.

It would be preferable for the cam 48 to be made in the form of a groove whose side walls co-operate in staggered positions with two corresponding rollers 44 mounted on the free end of the crank arm 42. This solution has proved beneficial in ensuring a greater precision of the orientation movement and a better distribution of the mechanical stresses, also as concerns wear and tear on the parts involved.

The profile of the cam 48 identifies the rotating movement of the shaft 40 and consequently the law of motion imparted by means of the elements 12 to the articles A.

For instance, supposing - for the sake of simplicity - that the speed v1 corresponds to the product of the angular velocity of the device 10 as a whole and the radius of the orbiting movement of the elements 12 around the axis X10 (which means that the elements 12 are kept stationary with respect to the device 10 in line with the pickup position T), then the cam 48 will present a constant profile (a uniform radius with respect to the axis X10) throughout the first stretch coinciding with the movement of the elements 12 from the collection position T, subsequently presenting a rising (or falling) front in the vicinity of the releasing point G, thus inducing a corresponding acceleration or deceleration (i.e. a movement forward or in reverse with respect to device 10) in the elements 12 sufficient to make the articles A reach the speed v2 at which they must be transferred to the conveyor C2 in order to achieve the required change in pitch. Naturally, the same action, usually complementary in terms of the direction of the movement, can be implemented at the pickup position T.

By way of example, assuming that we know the speed values v1 and v2, we can consider adjusting the operation of the device 10 so as to make it turn with an angular velocity sufficient to ensure that - when the elements 12 are stationary with respect to the device 10 - they orbit around the axis X10 at a speed v selected to coincide, for instance, with the average between the two speeds v1 and v2. Supposing that v2 is greater than v1 (which means that the articles A undergo a reduction in their separation pitch in the passage from the conveyor C1 to the conveyor C2), the cam 48 can be profiled so as to induce a reverse movement of the elements 12 in line with the pickup position T, corresponding to a deceleration of said elements to reach the speed v1 at which the articles A are collected by the conveyor C1. Once the articles A have been picked up, the elements 12 are maintained in a stationary position with respect to the device 10 during their passage between the pickup position T and the release position G. In line with the latter, again due to the effect of the profile of the cam 48, the elements 12 are induced to move forward, or accelerate, enough to bring the elements 12 (and consequently also the articles A they are carrying) up to the speed v2 at which the articles A are transferred onto the conveyor C2.

From the above explanation, it becomes clear that the solution proposed by the invention enables action to be taken in a range of values different from the speeds v1 and v2 without taking any substantial action on the structure of the device 10.

The above-described structure and mechanism of action are reproduced in much the same way in the embodiment illustrated in figures 4 and 5, the difference lying in the fact that the previously-described drive elements 36 to 44 are arranged in two concentric rows and in an alternating sequence according to the distribution of the elements 12 around the device 10.

In particular, if we look at figure 5, we can see that the four pinions, indicated as 38', arranged at the ends of an ideal Greek cross, that define an "outer" row of pinions that co-operate, on their outer side, with the corresponding racks 36 facing towards the inside of the device 10, these racks being situated at a given, first distance from the axis X10. The other four pinions, indicated as 38", are arranged at the ends of a second Greek cross, which is staggered at a 45° angle with respect to the first. These other pinions, 38", define an "inner" row of pinions that co-operate, again on their outer side, with corresponding racks 36 facing towards the inside of the device 10 and situated at a second distance from the axis X10, that is shorter than the previously-mentioned first distance.

In very simple terms, the arrangement described above is such that the first four pinions 38' and the first four racks 36 with which these pinions co-operate, are located at a greater distance from the axis X10 than the other four pinions 38" and the other four racks 36. To allow for this arrangement in two rows, one outer and one inner, the cam 48 is split into two concentric cams, 481 and 482 (that are structurally identical, even as concerns the opportunity to make them in the form of two surfaces designed to co-operate in a following role with two follower elements). Of the two cams in question, the first - indicated as 481 and situated in the outermost position - is destined to co-operate with the drive elements for the elements 12 situated on the outer ring. The cam 482, situated in a radially more internal position, is destined instead to co-operate in a controlling role with the drive elements situated on the inner ring. Clearly, given the relatively limited difference in the radial displacement of the two rows of pinions 38' and 38" and of the corresponding racks 36 (see figure 5), the different radial positioning of the two cams 481 and 482 is only just visible in the cross sections of figure 4.

In the version shown in figures 1 to 3, the elements 12, the racks 36 and the parts that co-operate with them occupy totally distinct angular portions of the development of the device 10. Conversely, in the version of figures 4 and 5, the elements 12, the racks 36 and the parts co-operating with them occupy angular portions of the development of the device 10 that overlap, to some degree at least, in the two above-mentioned rows, thus making them angularly coextensive, at least in part. This different geometric positioning makes the assembly more compact.

Otherwise, the general criteria for operating the device of figures 4 and 5 can be considered, on the whole, as similar to those described previously with specific reference to the embodiment illustrated in figures 1 to 3.

In both the embodiments illustrated, it is preferable for the profiling of the cams 48 (or 481 and 482) to be done so as to produce a modulation of the orbiting speed of the elements 12 with respect to the axis X10 only in line with the pickup position T and/or the release position G. Ensuring that the aforementioned speed modulation is only done in line with one or both of these positions proves advantageous for the purposes of developing a device of compact dimensions. The fact that, along most of the path covered between position T and position G, the elements 12 are actually stationary with respect to the body of the device 10 enables the elements 12 to be kept closer to each other. This different geometrical positioning is destined to make the assembly more compact.

There is also an advantage in using the solution described in relation to the extent of the return stroke of the elements 12 with respect to the device 10, in their orbiting movement around the axis X10 between the release position G and the pickup position T (in order to return to the initial position to pick up the articles A).

In the embodiment illustrated in figures 4 and 5, the carrier elements 12 are preferably configured in the form of mushroom-shaped elements, each capable of co-operating with a corresponding article A supported centrally. The elements 12 of figures 3 and 4 are capable of performing a rotating movement around their respective axis X60 oriented in a radial direction with respect to the axis X10.

The above-mentioned rotating movement is induced by the effect of a shaft 64 (which is hollow to allow for the passage of the vacuum lines 24) driven, by means of a bevel gear pair 66, by a corresponding shaft 68. Based on an arrangement substantially similar to the one described previously as concerns the acceleration/deceleration of the elements 12, the shaft 68 is driven by a crank assembly 70 controlled by a cam 72, which is also placed in a fixed position with respect to the movement of the device 10.

The profile of the cam 72 is achieved (according to criteria that are well known and therefore require no detailed description here) in such a manner as to ensure that, in the passage from the pickup position T to the release position G, the plates comprising the elements 12 perform a revolving movement with a typical amplitude of 90°. This rotating movement ensures that, for instance, the articles A collected from the conveyor C1 "lengthwise" are transferred to the conveyor C2 "crosswise". In this way, in addition to changing the separation pitch (or re-pitching), the device 10 made according to the invention is also capable of changing the orientation of the articles A.

Of course, without prejudice to the principle behind the invention, the details of its implementation and the versions in which it is developed may be amply varied with respect to the one described and illustrated here, without this departing from the context of the present invention as defined by the attached claims.

## Claims

1. Device for changing the separation pitch of articles (A) included in a flow of articles in motion, comprising:
- at least one carrier element (12) for the articles (A) capable of performing an orbiting movement around a main axis (X10) between a position where the articles are collected (T) and a position where they are released (G),
- drive elements (32 to 50) associated with said at least one carrier element (12) for selectively changing the speed of said orbiting movement in correspondence with at least one of said positions where the articles are collected (T) and released (G), **characterized by** the fact that:
- the device includes a structure (14 to 22) for supporting said at least one carrier element (12) capable of performing a rotating movement around said main axis (X10),
- the above-mentioned drive elements (32 to 50) include at least one guide element (32) that guides said at least one carrier element (12) in a movement on the aforementioned supporting structure (14 to 22) following an arched trajectory centered around said main axis (X10), and
- said drive elements (32 to 50) control the movement of said at least one carrier element (12) along said guide element (32), maintaining the distance between said carrier element (12) and said main axis (X10) substantially unchanged.

2. Device according to claim 1, **characterized by** the fact that said drive elements (32 to 50) induce the movement of said at least one carrier element (12) with respect to the supporting structure (14 to 20) in correspondence with at least one of the above-mentioned pickup and release positions (T and/or G), while said at least one carrier element (12) remain substantially stationary with respect to the structure (14 to 20) for the remainder of the trajectory of said orbiting movement between the collection position (T) and the release position (G).

3. Device according to claim 2, **characterized by** the fact that the drive elements (36 to 50) include a cam element (48; 481, 482) associated with a body (50) mounted in a stationary position with respect to the structure (14 to 20) that turns around the main axis (X10).

4. Device according to claim 3, **characterized by** the fact that said cam element includes a groove co-operating with at least one follower element (44) capable of inducing a movement in said at least one carrier element (12).

5. Device according to any of the aforementioned claims, **characterized by** the fact that the drive elements associated with said at least one carrier element (12) include:
- a rack (36) and a pinion (38) arranged respectively on one of said at least one carrier element (12) and said supporting structure (14 to 20), and
- a drive element (40, 42) acting on said pinion (38).

6. Device according to claim 3 and claim 5, **characterized by** the fact that said drive element includes a follower (44) capable of co-operating in a following relationship with said cam element (48).

7. Device according to claim 6, **characterized by** the fact that it includes a shaft (40) carrying said pinion (32) associated with an arm (42) for carrying said cam follower (44) at its free end.

8. Device according to claim 5, **characterized by** the fact that said at least one carrier element (12) extends over a certain length in the direction of the main axis (X10) between two respective end portions (12a, 12b), and by the fact that the drive elements include two of said pinions (38), each acting on one of said ends (12a, 12b).

9. Device according to any of the previous claims, **characterized by** the fact that:
- said at least one carrier element (12) has a structure that is at least partially hollow and suitable for being connected to a source of subatmospheric pressure, and
- said at least one carrier element (12) includes an apertured part (50) capable of co-operating with said articles (A), the arrangement being such that the presence of a subatmospheric pressure level in the carrier element (12) induces an air flow through the apertured part (30), thus having the effect of retaining the articles (A) against said at least one carrier element (12).

10. Device according to claim 9, **characterized by** the fact that the source of subatmospheric pressure is arranged so as to at least substantially inhibit the creation of any such subatmospheric pressure levels in the carrier elements (12) in correspondence with the positions (T) and (G) where the articles are respectively picked up and released.

11. Device according to any of the previous claims, **characterized by** the fact that said at least one carrier element (12) is at least partly capable of revolving so that it can perform a general movement of rotation around an axis (X60) extending in a radial direction with respect to the main axis (X10); said at least partly revolving carrier element being associated with corresponding drive elements (62 to 68) that induce its rotation during the transfer between the articles pickup position (T) and release position (G), the arrangement being such that said articles (A) can be rotated during their transfer between the pickup position (T) and the release position (G).

12. Device according to claim 11, **characterized by** the fact that the respective drive elements are configured to induce a rotating movement with an amplitude substantially equating to 90°.

13. Device according to any of the previous claims, **characterized by** the fact that it includes a plurality of said carrier element (12) arranged around said main axis (X10).

14. Device according to claim 13, **characterized by** the fact that the drive elements (32 to 50) associated with the above-mentioned carrier elements (12) are partly arranged in two rows, one outer and one inner with respect to the main axis (X10).

15. Device according to claim 14, **characterized by** the fact that the drive elements (32 to 50) for said inner row and the respective carrier elements (12) are at least partly angularly coextensive with homologous drive elements (32 to 50) for the outer row, and with the respective carrier elements (12).
